# FASCICULE DE BREVET EUROPEEN

(11) **EP 3 117 197 B1**
(45) Date de publication et mention de la délivrance du brevet: **06.11.2019**
(21) Numéro de dépôt: 15714594.7
(22) Date de dépôt: 10.03.2015
(51) Int. Cl.: G01L 19/08, G01L 19/16, G01D 5/39

(54) **MANOMÈTRE INTELLIGENT POUR BLOC ROBINET DE RÉCIPIENT DE FLUIDE SOUS PRESSION**
INTELLIGENTER DRUCKMESSER FÜR VENTILEINHEIT EINES DRUCKFLÜSSIGKEITSBEHÄLTERS
INTELLIGENT PRESSURE GAUGE FOR PRESSURIZED FLUID CONTAINER VALVE UNIT

(30) Priorité: 14.03.2014 FR 1452138
(43) Date de publication de la demande: 18.01.2017
(73) Titulaire: L'Air Liquide Société Anonyme pour l'Etude et l'Exploitation des Procédés Georges Claude, 75007 Paris (FR)
(72) Inventeur: BERNARD, Philippe, F-60000 Goincourt (FR); DECK, Philippe, F-93100 Montreuil (FR); QUATTRONE, Michele, F-78350 Les Loges-en-josas (FR)
(74) Mandataire: Pittis, Olivier
(86) Numéro de dépôt international: PCT/FR2015/050583
(87) Numéro de publication internationale: WO 2015/136207

(56) Documents cités:
- EP-A2- 1 643 182
- DE-A1-102009 055 093
- DE-U1- 20 009 787
- JP-A- H11 224 328
- US-A1- 2011 140 850
- US-A1- 2013 070 099

## Description

L'invention porte sur un procédé pour déterminer la pression mesurée par un manomètre comprenant un cadran portant un marquage de type code matriciel bidimensionnel et un indicateur de pression, telle une aiguille, mobile en rotation venant se positionner relativement audit marquage, ledit manomètre étant fixé au robinet de distribution équipant un récipient de fluide sous pression, telle une bouteille de gaz.

Les gaz industriels et médicaux sont couramment conditionnés dans des récipients de gaz, typiquement des bouteilles de gaz, équipés d'un bloc robinet, avec ou sans détendeur intégré, à savoir un robinet simple de type ouvert/fermé ou un robinet à détendeur intégré, encore appelé RDI, permettant de contrôler débit et pression du gaz délivré.

Afin de mesurer la pression du gaz dans le récipient et de pouvoir déterminer ainsi si le récipient contient encore du gaz ou non, il est habituel d'agencer sur le bloc robinet, un dispositif de mesure de pression, typiquement un manomètre à aiguille mobile en rotation.

Un tel dispositif de mesure de pression affiche la pression du gaz sur un cadran portant des graduations correspondant à des valeurs de pression en vis-à-vis desquelles vient se positionner l'aiguille rotative sous l'effet de la pression du gaz pour indiquer une valeur de pression mesurée.

En particulier, les manomètres anéroïdes utilisent l'élasticité d'une pièce métallique dont la déformation par le fluide sous pression, par exemple la déflection d'un diaphragme ou la variation de courbure d'un tube enroulé, tel un tube de Bourdon, permet de déterminer de manière fidèle la différence de pression appliquée, donc la pression du fluide.

L'utilisateur peut alors lire la pression de gaz dans une bouteille donnée en observant la valeur de pression correspondant à la graduation désignée par l'aiguille.

Il peut éventuellement la consigner manuellement dans une base de données de façon associée à la bouteille considéré.

Or, lorsque l'utilisateur doit gérer un parc comprenant plusieurs récipients de gaz, typiquement plusieurs dizaines ou centaines de bouteilles de gaz, il doit répéter l'opération sur tous les récipients du parc, ce qui s'avérer très rapidement fastidieux et prend d'autant plus de temps que le nombre de récipients est élevé.

En d'autres termes, une gestion d'un parc de récipients de gaz opérée de cette manière n'est pas idéale.

On connait par ailleurs :
- DE-U-20009787 décrivant un dispositif d'affichage avec indicateur mobile et une échelle désignant une pluralité d'informations différentes associées à l'indicateur, par exemple température, pression, valeur de consommation.... Ces informations sont configurées sous la forme de codes à barres ou analogues lisibles par une machine afin de pouvoir être affichées.
- JP-A-11224328 enseignant un manomètre dont le cadre est d'une échelle graduée pourvue de zones présentant des surfaces de réflexion différentes entre le minimum et le maximum de l'échelle graduée, ainsi que des pointeurs, de manière à permettre sa lecture automatisée par un appareil de mesure optique.
- et US-A-2013/0070099 proposant un procédé de lecture automatisée d'un manomètre comprenant une détermination du début de l'échelle graduée et de la position de l'aiguille sur l'échelle via un traitement d'image. Les images peuvent être obtenues au moyen d'une caméra ou analogue.

Le problème qui se pose est de pouvoir opérer une lecture automatisée de la valeur de pression mesurée, et d'associer, voire de mémoriser ensuite, cette valeur de pression mesurée à un récipient de gaz donné, typiquement une bouteille de gaz équipée d'un bloc robinet sur lequel est agencé un dispositif de mesure de pression mécanique à indicateur mobile, typiquement un manomètre à aiguille rotative, avantageusement en combinaison avec d'autres informations utiles, comme le type de gaz contenu dans le récipient considéré, sa limite d'utilisation, le nom du fournisseur..., et ce, de manière à améliorer la gestion globale d'un parc de récipients de gaz, typiquement de bouteilles de gaz.

La solution de l'invention est un procédé pour mesurer la pression affichée par un manomètre équipant un bloc robinet de distribution de fluide agencé sur un récipient de gaz, ledit manomètre comprenant un cadran portant un marquage et un indicateur de pression mobile en rotation par rapport audit cadran, l'indicateur de pression, lors de ses rotations, changeant d'orientation et/ou de position relativement au dudit marquage, le marquage comprenant un code bidimensionnel encodant au moins une information donnée choisie parmi une référence de bouteille de gaz, un numéro d'identification unique, un nom d'utilisateur, un type de gaz, une composition gazeuse, un lien vers un site internet, un nom de fournisseur de gaz, une capacité de bouteille de gaz, une date de péremption du gaz stocké dans une bouteille et un numéro de téléphone à contacter en cas de problème, et le code bidimensionnel comprenant, en outre, au moins un élément de repérage servant de position de référence permettant de déterminer la position l'indicateur de pression, dans lequel on procède selon les étapes de :
a) on opère une acquisition d'au moins une image du cadran du manomètre, ladite au moins une image comprenant le code bidimensionnel, au moins un élément de repérage servant de position de référence et l'indicateur de pression mobile,
b) on traite ladite au moins une image pour en décoder ladite au moins une information donnée encodée par le code bidimensionnel,
c) on traite ladite au moins une image pour détecter la position et l'orientation du code bidimensionnel définissant ladite au moins une information donnée,
d) on compare l'image brute obtenue à l'étape a) aux informations de position et d'orientation du code bidimensionnel obtenus à l'étape c) pour en déduire une zone d'intérêt de l'indicateur de pression sur le cadran dans ladite au moins une image obtenue à l'étape c),
e) on traite les informations obtenues aux étapes c) et d) pour en déduire la position de l'indicateur de pression par rapport audit au moins un élément de repérage dudit code bidimensionnel servant de position de référence, et
f) on déduit de la position de l'indicateur de pression une valeur de pression mesurée par le manomètre. Selon le cas, le procédé de l'invention peut comprendre l'une ou plusieurs des caractéristiques techniques suivantes :
   - le code bidimensionnel comprend des formes géométriques.
   - le code bidimensionnel comprend des disques.
   - le code bidimensionnel comprend des polygones, en particulier des carrés.
   - le code bidimensionnel comprend des formes géométriques de couleur sombre disposées sur un fond de couleur claire.
   - les formes géométriques sont des carrés de couleur noire et le fond de couleur claire est un carré blanc.
   - le code bidimensionnel est de type code QR.
   - le cadran est circulaire.
   - les formes géométriques sont des disques de couleur contrastée par rapport à la couleur du fond du manomètre, par exemple de couleurs noire et blanche.
   - les formes géométriques sont des disques répartis sur au moins une partie de la périphérie du cadran circulaire.
   - l'indicateur de pression mobile en rotation est une aiguille.
   - l'indicateur de pression est une aiguille longiligne de couleur foncée, en particulier noire.
   - l'axe de rotation de l'indicateur de pression est situé au centre du cadran.
   - le cadran et l'indicateur de pression sont protégés par une vitre.
   - il comprend un boitier comprenant un mécanisme élastique sensible à la pression coopérant avec l'indicateur de pression mobile en rotation, par exemple le mécanisme élastique sensible à la pression est un tube de Bourdon ou un diaphragme.
   - le cadran comprend des graduations permettant une lecture directe de la pression par l'utilisateur, sans que le code bidimensionnel ne soit une gêne pour la lecture à l'oeil nu.
   - ledit au moins un élément de repérage est ou comprend une forme géométrique.
   - ledit au moins un élément de repérage est ou comprend un point, un carré ou un trait ; toutefois, une autre forme peut également convenir.
   - ledit au moins un élément de repérage a une forme ou un graphisme servant de position de référence, ce qui permet de positionner l'indicateur de pression, c'est-à-dire l'aiguille, dans l'espace.
   - ledit au moins un élément de repérage est un signe, un marquage ou une forme situé sur le cadran faisant office de point de référence permettant de déterminer une position de l'indicateur de pression par rapport à cet élément de repérage et d'en déduire une pression de gaz.
   - ledit au moins un élément de repérage est situé sur le cadran, par exemple au moins un point, disque, carré, triangle, polygone, une forme tridimensionnelle, un trait ou autre.
   - il comprend plusieurs éléments de repérage, par exemple plusieurs carrés.
   - il comprend entre 1 et 5 éléments de repérage, de préférence entre 1 et 3 éléments de repérage.
   - il comprend au moins un élément de repérage faisant partie des formes géométriques formant le code bidimensionnel, en particulier un code bidimensionnel de type QR code.
   - le bloc robinet de distribution de fluide, en particulier de gaz, comprenant le manomètre est un bloc robinet à détendeur intégré.
   - le récipient de gaz est une bouteille de gaz, auquel est fixé le bloc robinet de distribution de fluide équipé du manomètre, le bloc robinet de distribution de fluide étant un bloc robinet.
   - le bloc robinet est protégé par un capotage de protection.

Un tel ensemble de distribution de fluide et/ou d'un tel bloc robinet parfaitement adaptés à une utilisation pour distribuer un fluide sous pression, en particulier du gaz à une pression allant jusqu'à 350 bar, ou plus.
- l'acquisition d'image de l'étape a) est opérée à l'aide d'un dispositif de lecture numérique, en particulier un dispositif incluant une caméra.
- à l'étape a), on acquiert une image brute.
- le code bidimensionnel est un code QR.
- le code bidimensionnel inclut au moins un élément de repérage servant de position de référence.
- le code bidimensionnel inclut plusieurs éléments de repérage servant (tous ou certains) de position de référence.
- le code bidimensionnel inclut 3 éléments de repérage, notamment des éléments graphiques, servant de position de référence, de préférence ayant une forme de carré.
- les étapes b) à f) sont mises en œuvre par un microprocesseur et un logiciel.
- ladite au moins une image est analysée à l'aide d'un ou plusieurs algorithmes mathématiques de reconnaissance de forme pour déterminer la position du cadran et/ou de l'indicateur de pression.
- à l'étape e), l'image représentative de la position de l'indicateur de pression sur le cadran est comparée à des images mémorisées correspondant chacune à une valeur de pression donnée.
- il comprend en outre une étape de mémorisation d'au moins une information donnée encodée par le code bidimensionnel du marquage, de la valeur de pression déterminée, la date de la lecture, les informations permettant de connaitre le terminal de lecture et sa géolocalisation.
- il comprend une étape d'affichage de la valeur de pression déterminée et d'au moins une information donnée encodée par le code bidimensionnel du marquage.
- le dispositif de lecture numérique est un téléphone intelligent ou une tablette numérique intégrant une caméra et un écran d'affichage de données.
- au moins une information donnée encodée par le code bidimensionnel du marquage est mémorisée et/ou affichée en association avec une valeur de pression déterminée à l'étape f).
- il comprend en outre une étape d'affichage de la valeur de pression déterminée et d'au moins une information donnée encodée par le code bidimensionnel du marquage.
- il comprend en outre une étape d'affichage de la quantité de gaz restante dans la bouteille obtenue par la combinaison des informations présentes ou déduites dans le code bidimensionnel et la valeur de la pression.
- il comprend en outre une étape d'affichage de la quantité de gaz consommée de la bouteille, déduite à partir de lectures du même manomètre effectuées à différents moments.
- il comprend en outre une étape d'affichage de l'autonomie restante de la bouteille, déduite à partir de la pression lue et des valeurs typiques de débit du gaz contenu dans la bouteille (la valeur de débit est saisie par l'utilisateur ou déduite par différence d'une lecture faite au préalable, par exemple.
- le dispositif de lecture numérique est un téléphone intelligent ou une tablette numérique intégrant une caméra et un écran d'affichage de données.
- au moins une information donnée encodée par le code bidimensionnel du marquage est mémorisée et/ou affichée en association avec une valeur de pression déterminée à l'étape e).

L'invention va maintenant être mieux comprise grâce à la description détaillée suivante, faite à titre illustratif mais non limitatif, en référence aux figures annexées parmi lesquelles :
- la Figure 1 représente un manomètre selon l'art antérieur,
- la Figure 2 représente un autre manomètre hors invention,
- la Figure 3 représente un mode de réalisation d'un manomètre utilisable avec le procédé selon l'invention,
- la Figure 4 schématise les principales étapes du procédé selon l'invention de mesure de la pression affichée par le manomètre de la Figure 3,
- la Figure 5 illustre l'acquisition de l'image du cadran du manomètre de la Figure 3 au moyen d'un téléphone intelligent, et
- la Figure 6 illustre l'affichage de la pression mesurée et d'autres informations utiles sur l'écran d'affichage d'un téléphone intelligent.

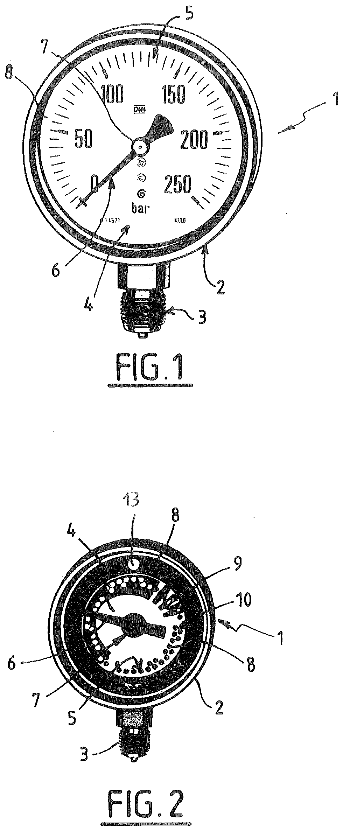

La Figure 1 représente un manomètre 1 selon l'art antérieur utilisable pour mesurer la pression d'un fluide sous pression, en particulier d'un gaz, stocké dans un récipient, telle une bouteille de gaz.

Typiquement, le manomètre 1 est fixé, en particulier fixé par vissage via un embout de fixation 3 fileté porté par le boitier 2, sur un bloc robinet, avec ou sans détendeur intégré, lui-même monté sur le récipient de fluide de manière à pouvoir mesurer la pression du fluide issu du récipient et traversant ledit bloc robinet.

Un tel manomètre 1 est formé d'un boitier 2 contenant un mécanisme élastique interne (non visible) sensible à la pression coopérant avec un indicateur de pression mobile en rotation, à savoir généralement une aiguille 6 mobile en rotation autour d'un axe 7 de rotation situé habituellement au centre d'un cadran 4 en forme de disque, c'est-à-dire de périphérie circulaire, portant des graduations 5 correspondant à des valeurs de pression, à savoir ici des valeurs de pressions comprises entre 0 et 250 bar. La prise de pression se fait au niveau de l'embout 3.

Classiquement, la pression du gaz mesurée par le manomètre 1 peut être lue par l'utilisateur sur le cadran 4 étant donné que l'aiguille 6 rotative vient se positionner, sous l'effet de la pression du fluide, vis-à-vis de la graduation 5 correspondant à la valeur de pression dudit fluide.

Le cadran 4 et l'aiguille 6 sont protégés par une vitre 8 transparente venant les recouvrir. La vitre 8 est fixée au boitier 2.

Le mécanisme élastique sensible à la pression est par exemple un tube de Bourdon ou un diaphragme. Ce type de mécanisme élastique équipe habituellement les manomètres anéroïdes qui utilisent l'élasticité d'une pièce métallique dont la déformation par le fluide sous pression, par exemple la déflection d'un diaphragme ou la variation de courbure d'un tube enroulé, tel un tube de Bourdon, permet de déterminer de manière fidèle la différence de pression appliquée, donc la pression du fluide.

Ce type de manomètre 1 selon l'art antérieur ne permet pas une gestion de parc aisée et présente d'autres inconvénients, notamment :
- l'exactitude de la lecture de pression dépend d'une bonne compréhension et interprétation des graduations inscrites sur le fond du manomètre de la part de l'opérateur.
- la valeur mesurée (souvent exprimée en bar) n'a pas une signification immédiate pour l'utilisateur, qui souhaite généralement connaître l'autonomie en gaz restant de la bouteille (exprimée en unités temporelles, par exemple en heures et minutes) ou la consommation de gaz pendant une durée déterminée. Ces informations doivent être retrouvées par calcul à partir de la valeur de pression lue.

On comprend aisément que des erreurs de lecture, d'interprétation et/ou de calcul peuvent survenir avec ce type de manomètre 1 de l'art antérieur.

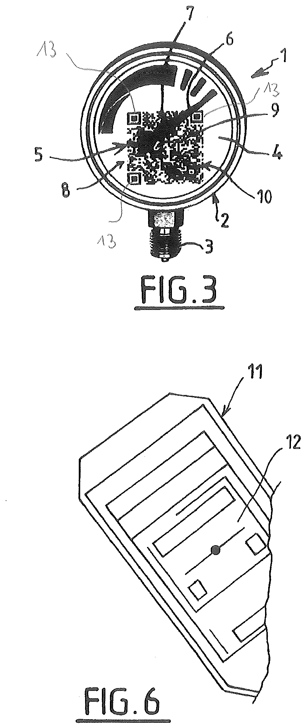

Les Figures 2 et 3 représentent deux modes de réalisation d'un manomètre 1 ; celui de la Figure 3 étant utilisable dans le procédé selon l'invention. Les manomètres 1 schématisés sur les Figures 2 et 3 ont globalement la même architecture et fonctionnent de la même manière que celui de la Figure 1. Les mêmes références sur les Figures 1, 2 et 3 désignent d'ailleurs les mêmes éléments.

De façon générale, le manomètre 1 des Figures 2 et 3 comprend, quel que soit le mode de réalisation considéré, un cadran 4 portant un marquage 5, 9 et un indicateur de pression mobile en rotation autour de l'axe 7, à savoir une aiguille 6 longiligne, et par rapport audit cadran 4. L'indicateur de pression 6 et le cadran 4 sont protégés par une vitre 8 transparente.

La pression du gaz est mesurée par le mécanisme élastique interne qui coopère avec l'aiguille 6, comme expliqué ci-avant, et cette mesure de pression est alors affichée par l'aiguille 6 qui entre en rotation sous l'effet de la pression et vient se positionner par rapport au marquage 5, 9 pour indiquer une valeur de pression correspondant à la pression du fluide dans le récipient sur lequel est monté le bloc robinet portant le manomètre 1 de l'invention. L'indicateur de pression 6 est une aiguille longiligne de couleur foncée, en particulier noire.

Le marquage 5, 9 comprend un code bidimensionnel 9 encodant au moins une information donnée. Le code bidimensionnel 9 comprend des formes géométriques 10, à savoir ici une multitude de disques ou de carrés de petites dimensions, dont l'organisation et le nombre encodent une ou plusieurs informations données.

Par ailleurs, le cadran 4 comprend, en outre, un (ou plusieurs) élément de repérage 13, encore appelé élément d'ancrage, à savoir ici un (ou des) élément graphique, servant de position de référence permettant de positionner l'indicateur de pression, c'est-à-dire l'aiguille 6, dans l'espace.

Dans le mode de réalisation de la Figure 2 (hors invention), les formes géométriques 10 du code bidimensionnel 9 sont des disques, de couleur noire et de couleur blanche, répartis sur la périphérie du cadran 4. On remarque aussi la présence d'un seul élément de repérage 13, situé ici en haut du cadran 4, servant de position de référence permettant de positionner l'indicateur de pression 6, c'est-à-dire l'aiguille rotative, sur le cadran et de déterminer ainsi une position angulaire de l'indicateur de pression 6 par rapport à cet élément de repérage 13 pour en déduire une pression de gaz et éventuellement une autonomie ensuite, comme détaillé ci-après.

Cet élément de repérage 13 est ou comprend une forme géométrique, par exemple un point, un trait, un carré ou autre. Ici, il s'agit d'un point en forme de disque. Comme on le voit, dans ce mode de réalisation, l'élément de repérage 13 est distinct des formes géométriques 10 formant le code bidimensionnel 9, c'est-à-dire qu'il ne fait pas partie des formes géométriques 10 formant le code bidimensionnel 9. La présence d'un tel élément de repérage 13 est particulièrement importante pour pouvoir automatiser la lecture d'une valeur de pression s'affichant sur le cadran 4.

Dans le mode de réalisation de la Figure 3 utilisable dans le procédé selon l'invention, les formes géométriques 10 formant le code bidimensionnel 9 sont des carrés de petite taille et de couleur noire qui sont répartis sur un fond de forme carrée et de couleur contrastée par rapport aux couleurs du fond du cadran, typiquement un carré de couleur blanche ou noire. Typiquement, le code bidimensionnel 9 est ici de type code QR.

Comme on le voit, dans ce mode de réalisation de la Figure 3, le cadran 4 porte plusieurs éléments de repérage 13, à savoir des éléments graphiques, incorporés aux formes géométriques 10 formant le code bidimensionnel 9, c'est-à-dire qu'il fait partie des formes géométriques 10 formant le code bidimensionnel 9.

Plus précisément, les formes géométriques 10 définissent ou dessinent une forme générale carrée formant le code bidimensionnel 9 de type code QR, et trois éléments de repérage 13 graphiques sont positionnés approximativement dans trois des angles de la forme générale carrée formant le code bidimensionnel 9.

Afin de repérer automatiquement la position de l'aiguille 6 sur le cadran 4, on peut utiliser l'un ou plusieurs de ces éléments de repérage 13 qui peuvent chacun servir de position de référence servant à positionner l'aiguille 6 dans l'espace.

Les éléments de repérage 13 illustrés en Figure 3 sont de forme carrée.

D'une façon générale, la ou les informations données encodées par le code bidimensionnel 9 du marquage 5, 9 du manomètre 1 de la Figure 3 correspondent par exemple à une référence de bouteille de gaz, un nom d'utilisateur, un type de gaz, une composition gazeuse, un lien vers un site internet, un nom de fournisseur de gaz, une date de péremption du gaz stockée dans la bouteille, un numéro de téléphone à contacter en cas de problème ou tout autre information utile.

Le code bidimensionnel 9 peut être imprimé, collé, sérigraphié ou déposé par toute autre technique sur le cadran 4.

Disposer un tel code bidimensionnel 9 sur le cadran 4 du manomètre 1 est particulièrement avantageux car cela permet de faciliter la gestion des parcs de bouteilles de gaz et de disposer de davantage d'informations concernant les différentes bouteilles qu'uniquement la pression lue par l'utilisateur.

De plus, un tel code bidimensionnel 9 permet d'automatiser la lecture des pressions s'affichant sur le cadran 4 et de pouvoir les associer, sans risque d'erreur, à une ou d'autres informations utiles, telles celles mentionnées ci-avant, et préférentiellement de les mémoriser ainsi associées les unes ou autres.

Ainsi, selon l'invention, on peut opérer une lecture automatisée de la valeur de pression fournie par l'aiguille 6, des informations encodées par le code bidimensionnel 9, comme par exemple référence de bouteille de gaz, nom d'utilisateur, type de gaz ou de composition gazeuse..., et les associer les unes aux autres et ensuite de les afficher et/ou mémoriser associées.

En outre, cela permet d'exploiter les fonctions de communication d'un téléphone intelligent ou d'une tablette tactile afin de transmettre sur des serveurs distants les informations lues et récupérées localement. Un traitement informatique ultérieur permettra de traiter et de mettre à disposition ces données sous forme avantageuse pour l'utilisateur, comme par exemple une vision simplifiée d'un stock de bouteilles.

En d'autres termes, grâce à l'élément de repérage 13, on peut désormais opérer une mesure de la pression affichée par le manomètre 1 de la Figure 3, de façon automatisée et associée à une ou d'autres informations selon le procédé décrit ci-après.

A titre d'exemple illustratif et pour faciliter la compréhension, on se réfère ci-après au manomètre 1 avec cadran 4 portant un code bidimensionnel 9 de type code QR tel qu'illustré sur la Figure 3.

Comme déjà dit, dans ce mode de réalisation, le code bidimensionnel 9 de type code QR comprend trois éléments de repérage 13 ayant une forme de carré pouvant être utilisés, tous ou seulement certains, comme position de référence servant à positionner l'aiguille 6 sur le cadran 4.

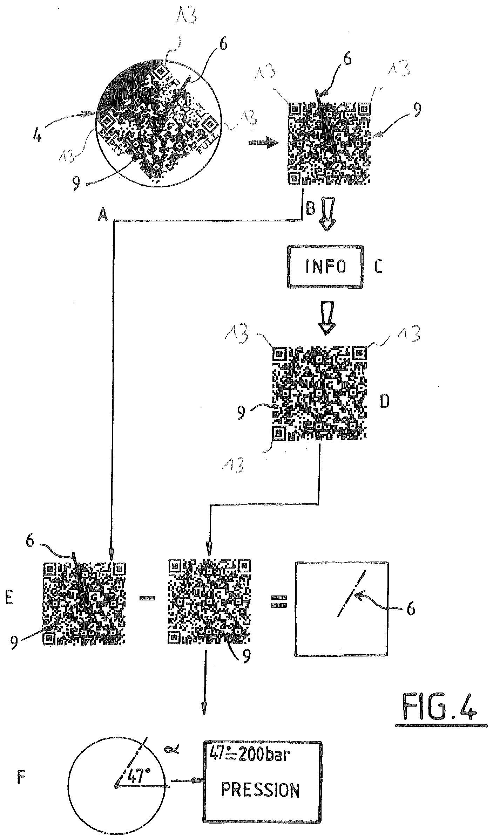

Les étapes du procédé selon l'invention sont illustrées sur la Figure 4.

Tout d'abord, on opère une acquisition (étapes A et B) d'une image ou plusieurs images, appelée(s) image(s) brute(s), du cadran 4 du manomètre 1 de la Figure 3, laquelle image ou lesquelles images incluant le code bidimensionnel 9, y compris les trois éléments de repérage 13, et l'indicateur de pression mobile, c'est-à-dire l'aiguille 6 positionnée en regard dudit code bidimensionnel 9.

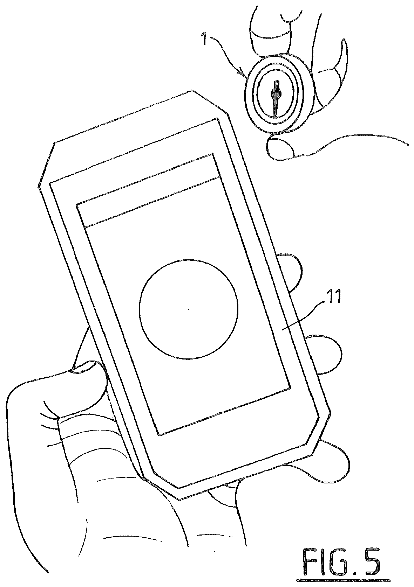

L'acquisition d'une image ou plusieurs images peut se faire au moyen d'une caméra, par exemple une caméra agencée sur un dispositif 11 de lecture numérique approprié, tel un téléphone intelligent (smartphone) ou analogue, comme expliqué ci-après en référence aux Figures 5 et 6.

Cette (ou ces) image est traitée (étape C) pour en décoder l'information INFO (ou les informations) encodée(s) par le code bidimensionnel 9.

La position de l'aiguille 6, qui pourrait se superposer à certaines informations du code bidimensionnel 9, ne gêne pas le décodage de l'information INFO grâce à l'utilisation de techniques de reconnaissance d'image et de reconstruction des données qui sont propres à la technologie d'encodage du code bidimensionnel 9 et connues par tout homme du métier.

De plus, la détection du code bidimensionnel 9 permet aussi la connaissance précise de la position et de l'orientation du code bidimensionnel 9 dans l'image ou les images, et permet de sélectionner aisément au sein de l'image, la zone d'intérêt incluant l'aiguille 6 et de reconstituer son positionnement dans l'espace, c'est-à-dire son positionnement angulaire sur le cadran 4.

Connaitre précisément la position et l'orientation du code bidimensionnel 9 et/ou de l'aiguille 6 est rendu possible et aisé grâce à la présence du ou des éléments de repérage 13 sur le cadran 4, donc aussi au sein de la ou des images.

Ensuite, on opère un ou des algorithmes de reconnaissance d'image et de reconnaissance de forme, qui sont bien connus par l'homme du métier, de sorte de détecter, dans la zone d'intérêt, la position et l'orientation de l'aiguille 6 sur le cadran 4 grâce au repère constitué par un ou plusieurs éléments de repérage graphiques 13.

Par exemple, mais non exhaustivement, on peut :
- opérer un algorithme de reconnaissance de contours de la zone d'intérêt, suivi par une transformée de Houg, détectant ainsi la direction prédominante des contours reconnus ;
- ou opérer un algorithme de reconnaissance de contours, suivi par la détection de la valeur maximale d'après une transformation en coordonnées polaires centrée sur la zone d'intérêt ;
- ou encore opérer une soustraction de l'image avec une image de référence pour en supprimer la composition géométrique correspondant à l'information INFO encodée et ainsi obtenir uniquement l'image de la position de l'aiguille 6 sur le cadran 4, qui est comparée ensuite avec une position de référence, par exemple une position angulaire de référence.

Enfin, la position et l'orientation de l'aiguille 6 sur le cadran 4 est comparée avec la position et l'orientation du code bidimensionnel 9, donc avec le ou les éléments de repérage graphiques 13 inclus dans le code QR, pour en déduire une valeur de pression mesurée par le manomètre 1.

Par exemple, le traitement de l'image de la position de l'aiguille 6 peut être comparée à une position angulaire de référence pour déterminer un angle α, par exemple ici de 47°, lequel angle α étant lui-même utilisé pour déduire une valeur de pression, par exemple 200 bar, à partir d'une table de correspondances préétablie ou analogue faisant correspondre des valeurs d'angles α et des valeurs de pression correspondantes.

Une telle table de correspondances peut être aisément établie via de simples essais empiriques. Elle est ensuite mémorisée et peut être rappelée pour procéder à ladite comparaison.

Comme illustré sur la Figure 5, l'acquisition de l'image brute du cadran 4 du manomètre 1 est préférentiellement opérée à l'aide d'un dispositif 11 de lecture numérique, en particulier un dispositif incluant une caméra, comme un téléphone intelligent ou une tablette numérique, équipé d'un caméra et mettant en œuvre une application ou module de lecture de code bidimensionnel, notamment de QR code, par exemple module de lecture de code Manatee Works Barcode Scanne SDK fonctionnant sous environnement Android™, IOs, or Windows Mobile

Par exemple, les étapes du procédé sus-décrit ont été mises en œuvre, sur un téléphone intelligent fonctionnant sous environnement Android™, et à l'aide d'un logiciel s'appuyant sur une librairie de traitement d'images, tel que OpenCV™.

La valeur de pression ainsi déterminée peut être alors mémorisée, de préférence associée à la (ou aux) information encodée par le code bidimensionnel 9 et décodée comme expliqué ci-avant.

Bien entendu, tout ou partie des informations, images ou autres données peuvent être mémorisés et/ou affiché sur un écran d'affichage de données, tel l'écran 12 d'un dispositif 11 de lecture numérique, tel un téléphone intelligent ou une tablette numérique, comme illustré en Figure 6.

La présente invention est particulièrement utile pour opérer une gestion efficace d'un parc de récipients de gaz, telles des bouteilles de gaz.

## Revendications

1. Procédé pour mesurer la pression affichée par un manomètre (1) équipant un bloc robinet de distribution de fluide agencé sur un récipient de gaz, ledit manomètre (1) comprenant un cadran (4) portant un marquage (5, 9) et un indicateur de pression (6) mobile en rotation (7) par rapport audit cadran (4), l'indicateur de pression (6), lors de ses rotations, changeant d'orientation et/ou de position relativement au dudit marquage (5, 9), le marquage (5, 9) comprenant un code bidimensionnel (9) encodant au moins une information donnée choisie parmi une référence de bouteille de gaz, un numéro d'identification unique, un nom d'utilisateur, un type de gaz, une composition gazeuse, un lien vers un site internet, un nom de fournisseur de gaz, une capacité de bouteille de gaz, une date de péremption du gaz stocké dans une bouteille et un numéro de téléphone à contacter en cas de problème, et le code bidimensionnel (9) comprenant, en outre, au moins un élément de repérage (13) servant de position de référence permettant de déterminer la position l'indicateur de pression (6), dans lequel on procède selon les étapes de :
a) on opère une acquisition d'au moins une image du cadran (4) du manomètre (1), ladite au moins une image comprenant le code bidimensionnel (9), au moins un élément de repérage (13) servant de position de référence et l'indicateur de pression mobile (6),
b) on traite ladite au moins une image pour en décoder ladite au moins une information donnée encodée par le code bidimensionnel (9),
c) on traite ladite au moins une image pour détecter la position et l'orientation du code bidimensionnel (9) définissant ladite au moins une information donnée,
d) on compare l'image brute obtenue à l'étape a) aux informations de position et d'orientation du code bidimensionnel obtenus à l'étape c) pour en déduire une zone d'intérêt de l'indicateur de pression sur le cadran dans ladite au moins une image obtenue à l'étape c),
e) on traite les informations obtenues aux étapes c) et d) pour en déduire la position de l'indicateur de pression par rapport audit au moins un élément de repérage (13) dudit code bidimensionnel (9) servant de position de référence, et
f) on déduit de la position de l'indicateur de pression une valeur de pression mesurée par le manomètre (1).

2. Procédé selon la revendication précédente, **caractérisé en ce que** le code bidimensionnel (9) comprend des formes géométriques (10).

3. Procédé selon la revendication précédente, **caractérisé en ce que** le code bidimensionnel comprend des formes géométriques (10) choisies parmi les disques et des polygones, en particulier les carrés.

4. Procédé selon l'une des revendications précédentes, **caractérisé en ce que** les formes géométriques (10) sont des disques répartis sur au moins une partie de la périphérie du cadran (4), de préférence un cadran (4) de forme circulaire.

5. Procédé selon l'une des revendications précédentes, **caractérisé en ce que** l'indicateur de pression (6) mobile en rotation est une aiguille, de préférence une aiguille longiligne de couleur foncée, en particulier noire.

6. Procédé selon l'une des revendications précédentes, **caractérisé en ce que** ledit au moins un élément graphique (13) comprend une forme géométrique, de préférence il comprend un point, un carré ou un trait.

7. Procédé selon la revendication 1, **caractérisé en ce que** l'acquisition d'image brute de l'étape a) est opérée à l'aide d'un dispositif de lecture numérique, en particulier un dispositif incluant une caméra.

8. Procédé selon la revendication 1, **caractérisé en ce que** les étapes b) à f) sont mises en œuvre par un microprocesseur et un logiciel.

9. Procédé selon la revendication 1, **caractérisé en ce qu'**à l'étape e), l'image représentative de la position de l'indicateur de pression sur le cadran est comparée à des images mémorisées correspondant chacune à une valeur de pression donnée.

10. Procédé selon l'une des revendications 1 ou 9, **caractérisé en ce qu'**il comprend en outre une étape d'affichage de la valeur de pression déterminée et d'au moins une information donnée encodée par le code bidimensionnel (9) du marquage.

11. Procédé selon la revendication 7, **caractérisé en ce que** le dispositif de lecture numérique est un téléphone intelligent ou une tablette numérique intégrant une caméra et un écran d'affichage de données.

12. Procédé selon la revendication 1, **caractérisé en ce qu'**au moins une information donnée encodée par le code bidimensionnel (9) du marquage est mémorisée et/ou affichée en association avec une valeur de pression déterminée à l'étape f).

13. Procédé selon la revendication 1, **caractérisé en ce que** le code bidimensionnel (9) est un code QR.

14. Procédé selon la revendication 1, **caractérisé en ce qu'**il comprend en outre une étape d'affichage et/ou mémorisation de la valeur de pression déterminée à l'étape f) et d'au moins une information donnée encodée par le code bidimensionnel (9) du marquage.

15. Procédé selon la revendication 1, **caractérisé en ce qu'**il comprend en outre une étape d'affichage de:
i) la valeur de pression déterminée et d'au moins une information donnée encodée par le code bidimensionnel (9) du marquage, ou
ii) la quantité de gaz restante dans le récipient obtenue par la combinaison des informations présentes dans le code bidimensionnel (9) et la valeur de la pression.

## Patentansprüche

1. Verfahren zum Messen des durch ein Manometer (1) angezeigten Drucks, das einen Schließhahnblock zur Ausgabe von Fluid ausrüstet, der auf einem Gasbehälter angeordnet ist, wobei das Manometer (1) eine Skala (4) umfasst, die eine Markierung (5, 9) und einen Druckanzeiger (6) trägt, der im Verhältnis zu der Skala (4) drehbeweglich (7) ist, wobei der Druckanzeiger (6) bei seinen Drehungen eine Ausrichtung und / oder eine Position in Bezug auf die Markierung (5, 9) ändert, wobei die Markierung (5, 9) einen zweidimensionalen Code (9) umfasst, der mindestens eine gegebene Information codiert, die ausgewählt wird aus einer Gasflaschenreferenz, einer eindeutigen Identifizierungsnummer, einem Benutzernamen, einem Gastyp, einer gasförmigen Zusammensetzung, einem Link zu einer Website, einem Namen eines Gaslieferanten, einer Gasflaschenfüllmenge, einem Verfallsdatum für das Gas, das in einer Flasche gelagert wird, und einer Telefonnummer, die im Problemfall zu kontaktieren ist, und wobei der zweidimensionale Code (9) weiter mindestens ein Kennzeichnungselement (13) umfasst, das als Referenzposition dient, die es ermöglicht, die Position des Druckanzeigers (6) zu bestimmen, wobei man gemäß den folgenden Schritten vorgeht:
a) man nimmt eine Erfassung mindestens eines Bildes der Skala (4) des Manometers (1) vor, wobei das mindestens eine Bild den zweidimensionalen Code (9), mindestens ein Kennzeichnungselement (13), das als Referenzposition dient und den beweglichen Druckanzeiger (6) umfasst,
b) man bearbeitet das mindestens eine Bild, um daraus die mindestens eine gegebene Information zu decodieren, die durch den zweidimensionalen Code (9) codiert ist,
c) man bearbeitet das mindestens eine Bild, um die Position und die Ausrichtung des zweidimensionalen Codes (9) zu detektieren, die die mindestens eine gegebene Information definieren,
d) man vergleicht das in dem Schritt a) erhaltene Rohbild mit den Positions- und Ausrichtungsinformationen des in dem Schritt c) erhaltenen zweidimensionalen Codes, um daraus eine Zone von Interesse des Druckanzeigers auf der Skala in dem mindestens einen in dem Schritt c) erhaltenen Bild abzuleiten,
e) man bearbeitet die in den Schritten c) und d) erhaltenen Informationen, um daraus die Position des Druckanzeigers in Bezug auf das mindestens eine Kennzeichnungselement (13) des zweidimensionalen Codes (9) abzuleiten, das als Referenzposition dient, und;
f) man leitet aus der Position des Druckanzeigers einen durch das Manometer (1) gemessenen Druckwert ab.

2. Verfahren nach dem vorstehenden Anspruch, **dadurch gekennzeichnet, dass** der zweidimensionale Code (9) geometrische Formen (10) umfasst.

3. Verfahren nach dem vorstehenden Anspruch, **dadurch gekennzeichnet, dass** der zweidimensionale Code geometrische Formen (10) umfasst, die aus den Scheiben und Vielecken, im Speziellen den Quadraten ausgewählt werden.

4. Verfahren nach einem der vorstehenden Ansprüche, **dadurch gekennzeichnet, dass** die geometrischen Formen (10) Scheiben sind, die auf mindestens einem Teil der Peripherie der Skala (4), vorzugsweise einer Skala (4) in Kreisform, verteilt sind.

5. Verfahren nach einem der vorstehenden Ansprüche, **dadurch gekennzeichnet, dass** der drehbewegliche Druckanzeiger (6) eine Nadel, vorzugsweise eine längliche Nadel in dunkler, im Speziellen schwarze Farbe ist.

6. Verfahren nach einem der vorstehenden Ansprüche, **dadurch gekennzeichnet, dass** das mindestens eine grafische Element (13) eine geometrische Form umfasst, es vorzugsweise einen Punkt, ein Quadrat oder einen Strich umfasst.

7. Verfahren nach Anspruch 1, **dadurch gekennzeichnet, dass** das Erfassen eines Rohbildes aus Schritt a) mithilfe einer digitalen Lesevorrichtung, im Speziellen einer Vorrichtung durchgeführt wird, die eine Kamera beinhaltet.

8. Verfahren nach Anspruch 1, **dadurch gekennzeichnet, dass** die Schritte b) bis f) durch einen Mikroprozessor und eine Software ausgeführt werden.

9. Verfahren nach Anspruch 1, **dadurch gekennzeichnet, dass** im Schritt e) das repräsentative Bild für die Position des Druckanzeigers auf der Skala mit gespeicherten Bildern verglichen wird, die jeweils einem gegebenen Druckwert entsprechen.

10. Verfahren nach einem der Ansprüche 1 oder 9, **dadurch gekennzeichnet, dass** es weiter einen Schritt zum Anzeigen des bestimmten Druckwerts und mindestens einer gegebenen Information umfasst, die durch den zweidimensionalen Code (9) der Markierung codiert ist.

11. Verfahren nach Anspruch 7, **dadurch gekennzeichnet, dass** die digitale Lesevorrichtung ein intelligentes Telefon oder ein Tablet-Computer ist, die eine Kamera und einen Bildschirm zum Anzeigen von Daten integrieren.

12. Verfahren nach Anspruch 1, **dadurch gekennzeichnet, dass** mindestens eine gegebene Information, die durch den zweidimensionalen Code (9) der Markierung codiert ist, gemeinsam mit einem im Schritt f) bestimmten Druckwert gespeichert und/ oder angezeigt wird.

13. Verfahren nach Anspruch 1, **dadurch gekennzeichnet, dass** der zweidimensionale Code (9) ein QR-Code ist.

14. Verfahren nach Anspruch 1, **dadurch gekennzeichnet, dass** es weiter einen Schritt zum Anzeigen und/ oder Speichern des im Schritt f) bestimmten Druckwerts und mindestens einer gegebenen Information, die durch den zweidimensionalen Code (9) der Markierung codiert ist, umfasst.

15. Verfahren nach Anspruch 1, **dadurch gekennzeichnet, dass** es weiter einen Anzeigeschritt umfasst von:
i) dem bestimmten Druckwert und von mindestens einer gegebenen Information, die durch den zweidimensionalen Code (9) der Markierung codiert ist, oder
ii) der verbleibenden Gasmenge in dem Behälter, erhalten durch die Kombination der in dem zweidimensionalen Code (9) vorhandenen Informationen und des Werts des Drucks.

## Claims

1. Method for measuring the pressure displayed by a manometer (1) equipping a fluid-dispensing tap unit arranged on a gas container, said manometer (1) comprising a dial (4) bearing a marking (5, 9) and a pressure indicator (6) able to rotate (7) with respect to said dial (4), the pressure indicator (6), during rotations thereof, changing orientation and/or position in relation to said marking (5, 9), the marking (5, 9) comprising a two-dimensional code (9) encoding at least one given item of information chosen from a gas cylinder reference, a unique identification number, a user name, a type of gas, a gaseous composition, a link to an internet site, a gas-supplier name, a gas cylinder capacity, an expiry date for the gas stored in a cylinder and a telephone number to be contacted in the event of a problem, and the two-dimensional code (9) further comprising at least one reference (13) serving as a reference position making it possible to determine the position of the pressure indicator (6), wherein the following steps are performed:
a) at least one image of the dial (4) of the manometer (1) is acquired, said at least one image comprising the two-dimensional code (9), at least one reference (13) serving as a reference position and the movable pressure indicator (6),
b) said at least one image is processed in order to decode therefrom said at least one given item of information encoded by the two-dimensional code (9),
c) said at least one image is processed in order to detect the position and orientation of the two-dimensional code (9) defining said at least one given item of information,
d) the unprocessed image obtained at step a) is compared with the information on the position and orientation of the two-dimensional code obtained at step c), in order to deduce therefrom a zone of interest of the pressure indicator on the dial in said at least one image obtained at step c),
e) the information obtained at steps c) and d) is processed in order to deduce therefrom the position of the pressure indicator with respect to said at least one reference element (13) of said two-dimensional code (9) serving as a reference position, and
f) a pressure value measured by the manometer (1) is deduced from the position of the pressure indicator.

2. Method according to the preceding claim, **characterised in that** the two-dimensional code (9) comprises geometric shapes (10).

3. Method according to the preceding claim, **characterised in that** the two-dimensional code comprises geometric shapes (10) chosen from discs and polygons, in particular squares.

4. Method according to any of the preceding claims, **characterised in that** the geometric shapes (10) are discs distributed over at least part of the periphery of the dial (4), preferably a circular-shaped dial (4).

5. Method according to any of the preceding claims, **characterised in that** the rotatable pressure indicator (6) is a pointer, preferably an elongated pointer with a dark colour, in particular black.

6. Method according to any of the preceding claims, **characterised in that** said at least one graphic element (13) comprises a geometric shape, and preferably comprises a dot, a square or a line.

7. Method according to claim 1, **characterised in that** the unprocessed image of step a) is acquired by means of a digital reading device, in particular a device including a camera.

8. Method according to claim 1, **characterised in that** steps b) to f) are implemented by a microprocessor and software.

9. Method according to claim 1, **characterised in that**, at step e), the image representing the position of the pressure indicator on the dial is compared with stored images each corresponding to a given pressure value.

10. Method according to any of claims 1 or 9, **characterised in that** it further comprises a step whereby are displayed the determined pressure value and at least one given item of information encoded by the two-dimensional code (9) of the marking.

11. Method according to claim 7, **characterised in that** the digital reading device is a smartphone or a digital tablet integrating a camera and a data display screen.

12. Method according to claim 1, **characterised in that** at least one given item of information encoded by the two-dimensional code (9) of the marking is stored and/or displayed in association with a pressure value determined at step f).

13. Method according to claim 1, **characterised in that** the two-dimensional code (9) is a QR code.

14. Method according to claim 1, **characterised in that** it further comprises a step whereby are displayed and/or stored the pressure value determined at step f) and at least one given item of information encoded by the two-dimensional code (9) of the marking.

15. Method according to claim 1, **characterised in that** it further comprises a step whereby are displayed:
i) the determined pressure value and at least one given item of information encoded by the two-dimensional code (9) of the marking, or
ii) the quantity of gas remaining in the container obtained by combining the information present in the two-dimensional code (9) and the pressure value.
